# EUROPEAN PATENT APPLICATION

(11) **EP 1 445 690 A2**
(43) Date of publication of application: **11.08.2004**
(21) Application number: 04000375.8
(22) Date of filing: 09.01.2004
(51) Int. Cl.: G06F 3/14

(54) **Information processing apparatus and method for transmitting a screen image data**

(30) Priority: 07.02.2003 JP 2003030780
(71) Applicant: Kabushiki Kaisha Toshiba, Tokyo (JP)
(72) Inventor: Kakemura, Atsushi, 1-1-1, Shibaura Minato-ku Tokyo (JP)
(74) Representative: Henkel, Feiler & Hänzel

(57) **Abstract**

A wireless utility program 11 of a PDA 1 transmits image data to a wireless projector 2 by wireless communication. When the screen image data has not changed, the transmission of data is not performed. The wireless utility program 11 of the PDA 1 automatically transmits updated screen image data to the wireless projector 2 by wireless communication whenever the screen image data of PDA 1 is updated without the explicit instruction for performing transmission process of the screen image data by user.

## Description

### CROSS REFERENCE TO RELATED APPLICATION

This application is based upon and claims the benefit of priority from the prior Japanese Patent Application No. P2003-030780, filed February 7, 2003; the entire contents of which are incorporated herein by reference.

### BACKGROUND OF THE INVENTION

### 1. Field of the invention

The present invention relates to an information processing apparatus such as a portable computer and a method for transmitting a screen image data used in the apparatus.

### 2. Description of the Related Art

In recent years, various portable information processing apparatus such as a personal digital assistant (PDA) and portable computers of a notebook or palm type have been developed. Most of the portable information processing apparatus have a wireless communication function and can connect using the wireless communication function to other information processing apparatus and various consumer electronic devices.

As an applied system of the information processing apparatus using the wireless communication function, Japanese Patent Disclosure (Kokai) No.2002-218420 discloses an information display system in which image data transmitted from the information processing apparatus using the wireless communication function is displayed on a large screen by a projector. In the information display system of the above reference, image data stored in a storage device of the information processing apparatus is transmitted to the projector by radio waves.

By the way, when a presentation is performed, it is proper to display not only specific image data but various screen image displayed on the information processing apparatus operated by a presenter itself as well on the screen by the projector. On a system connected between the information processing apparatus and projector by a cable, the output of external monitor in the information processing apparatus is connected to the projector by the cable. The video signals generating a screen image displayed in the information processing apparatus are transmitted to the projector to display the screen image on the screen. However, when the information processing apparatus is connected to the projector by radio waves, available communication frequency band generally is limited.

### SUMMARY OF THE INVENTION

An embodiment of the present invention provides an information processing apparatus and method for transmitting an image data which can transmit a screen image data to an external device such as a projector efficiently.
According to an embodiment of present invention, an information processing apparatus for communicating with an external device, which displays received image data, by the wireless, comprising: means for displaying a image data; characterized by means for determining whether the image data to be displayed on the displaying means is updated; and means for transmitting the updated image data to the external device when the determining means determined that the image data is updated.

### BRIEF DESCRIPTION OF THE DRAWINGS

The accompanying drawings, which are incorporated in and constitute a part of the specification, illustrate presently preferred embodiments of the invention, and together with the general description given above and the detailed description of the preferred embodiments given below, serve to explain the principles of the invention in which:]

Fig. 1 is a block diagram for explaining the function of an information processing apparatus according to an embodiment of the present invention;

Fig. 2 is a block diagram showing a system configuration of the information processing apparatus;

Fig. 3 is a view showing a wireless utility window displayed on the display of the information processing apparatus;

Fig. 4 is a view showing a state in which the wireless utility window is minimized on the display of the information processing apparatus;

Fig. 5 is a flowchart showing the procedure of a image capture process performed by the information processing apparatus;

Fig. 6 is a diagram for explaining a state of communication between the information processing apparatus and the projector;

### DETAILED DESCRIPTION OF THE INVENTION

Embodiments of the invention will be described with reference to the accompanying drawings.

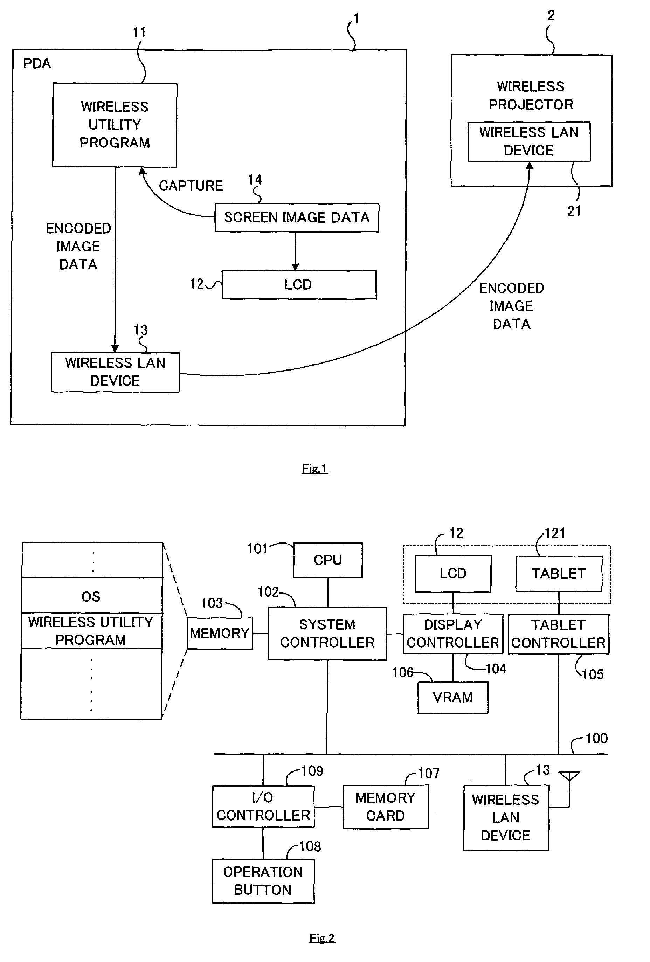

Fig. 1 shows an information processing apparatus according to an embodiment of the present invention. In the representative embodiment, the information processing apparatus is implemented as a PDA (a personal digital assistant). However, other types of information processing apparatuses may be used such as a laptop computer or other devices having wireless communications (and in some embodiments wired communications) capabilities and a presentation data storage memory. The PDA 1 is a portable information processing apparatus acting as a mobile terminal. The PDA 1 has a wireless LAN device 13. The wireless LAN device 13 is a wireless communication device constructed to perform wireless communication in accordance with, for example, IEEE 802.11a/IEEE 802.11b, and a Bluetooth standard. A wireless presentation function of the PDA 1 will be described hereinafter.

The wireless presentation function includes the function of displaying screen image data of the PDA 1 on a projector screen of the wireless projector 2. The wireless presentation function is implemented by using wireless communication between the PDA 1 and the wireless projector 2. The wireless projector 2 includes a wireless LAN device 21 and a buffer for storing the Screen image data received from the PDA 1. The wireless LAN device 21 is a wireless communication device constructed to perform wireless communication in accordance with, for example, IEEE 802.11a/IEEE 802.11b standard.

The PDA 1 has a wireless utility program 11 installed therein. The wireless utility program 11 is a program for controlling wireless presentations. The wireless utility program 11 captures the screen image data that is displayed in the LCD 12 used as the display of the PDA 1, and transmits the captured screen image data to the wireless projector 2 over a wireless signal using the wireless LAN device 13.

In such a case, the updated screen image data is transmitted from the PDA 1 to the wireless projector 2 only when the screen image data to be displayed in the LCD 12 has been updated. The updated screen image data is encoded by the wireless utility program 11 and then fed to the wireless LAN device 13. However, when the contents of the screen image data has not changed, the transmission of the screen image data from the PDA 1 to the wireless projector 2 is not performed.

The wireless projector 2 receives the screen image data via the wireless LAN device 21, and then projects an optical image corresponding to the received screen image data onto a large projection screen. The received screen image data is decoded and then written to a frame buffer in the wireless projector 2. Then the optical image corresponding to the screen image data stored in the frame buffer is projected onto the large projection screen. When the contents of the screen image data has not changed, the contents of the stored data in the frame buffer has not changed. Hence, the same optical image is continued to be projected onto the large projection screen.

It is noted that the screen of the projector may take many forms, and may include a reflecting screen (or even a wall), or a monitor such as an LCD, plasma screen, TV-type monitor and the like.

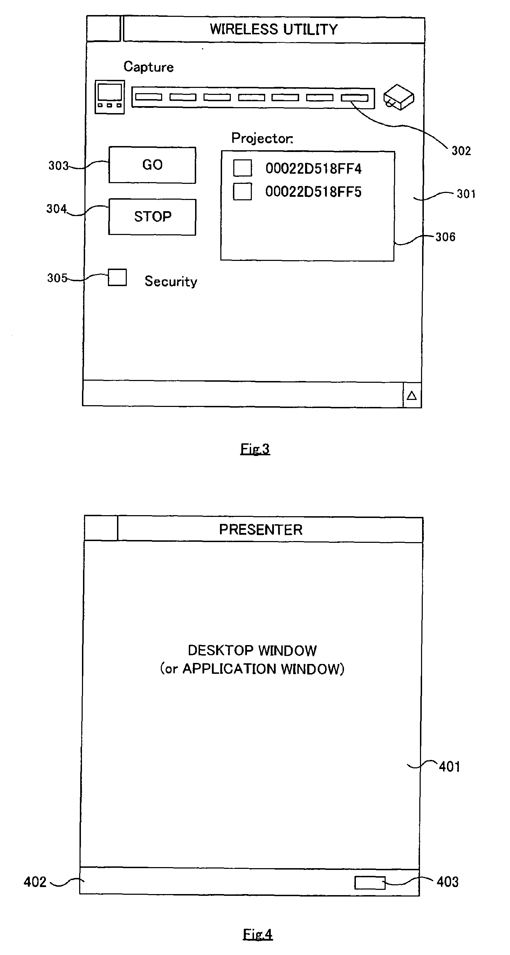

Referring to Fig. 2, the system configuration of the PDA 1 will be described. In addition to the LCD 12 and wireless LAN device 13, the PDA 1 includes a central processing unit (CPU) 101, a system controller 102, a memory 103, a display controller 104, a tablet controller 105, a video memory (VRAM) 106, an I/O controller 109, a memory card 107, and operation buttons 108.

The CPU 101 is a processor for controlling the operation of the PDA 1 and executes an operating program (OS) and various application programs/utility programs. The OS includes a tablet control function for implementing a pen input operation.

The memory 103 includes a nonvolatile memory and a random access memory (RAM). The nonvolatile memory stores the OS and the various application programs/utility programs. The RAM is used as a main memory. The nonvolatile memory also stores the wireless utility program 11.

The system controller 102 is a bridge device for connecting a local bus of the CPU 101 and a system bus 100. The system controller 102 also includes a memory controller for controlling the memory 103. The display controller 104 controls the LCD 12 to display the screen image data drawn in the VRAM 106 on the LCD 12. The display resolution of the LCD 12 is QVGA (320 × 240) that is a quarter of the resolution of the VGA (640 × 480), as described above. Each application program and the utility program draw the screen image data of QVGA size in the VRAM 106 through a display driver.

The VRAM 106 includes an on-screen area and an off-screen area. The on-screen area is a memory area for storing the screen image data to be displayed on the LCD 12 and is used as a frame buffer. The display controller 104 sequentially reads out the screen image data from the on-screen area and displays it on the LCD 12.

The tablet controller 105 controls the tablet 121. The tablet 121 is constructed of a transparent coordinate detecting device provided on the display screen of the LCD 12. The LCD 12 and the tablet 121 constitute a pen-input touch screen.

The I/O controller 109 controls the memory card 107 and the operation buttons 108. The memory card 107 is detachably inserted into the PDA 1. The operation buttons 108 include a plurality of operation buttons such as a power button, an application button for activating a specific application, and a cursor key.

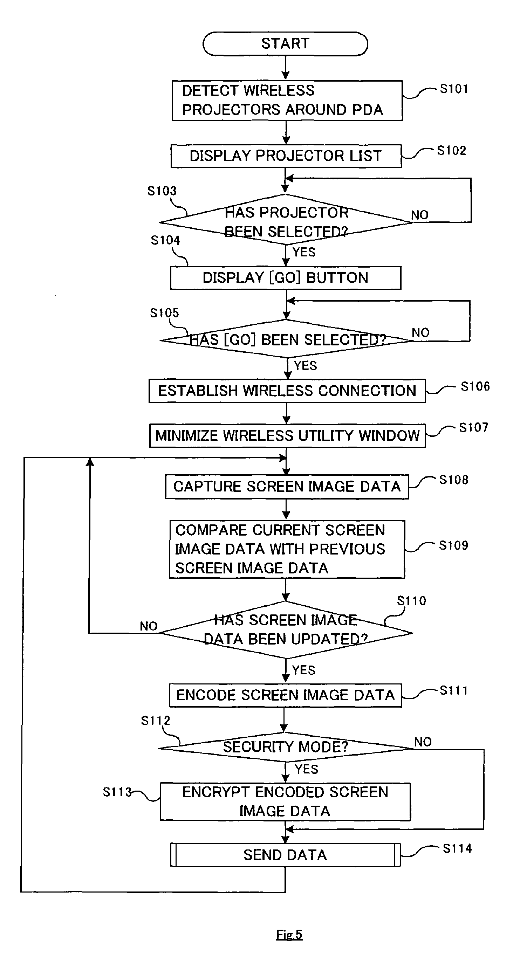

The details of a wireless presentation function (a screen capture function below) provided by the wireless utility program 11 are now described. Fig. 3 shows a wireless utility window 301 displayed on the LCD 12 by the wireless utility program 11. When the user has activated the wireless utility program 11, the wireless utility window 301 in Fig. 3 is displayed on the screen of the LCD 12 of the PDA.

As shown in Fig. 3, the wireless utility window 301 has a transmission indicator 302, a [GO] button 303, a [STOP] button 304, a [Security] check box 305, and a projector list 306.

The transmission indicator 302 indicates the state of the communication between the PDA 1 and the wireless projector 2. The [GO] button 303 is a button for instructing the start of screen capture function for automatically transmitting slide data from the PDA 1 to the wireless projector 2. When the [GO] button 303 is tapped (clicked) by pen input, the screen capture function is started. The [STOP] button 304 is a button for stopping the screen capture function.

The projector list 306 provides the list of wireless projectors within the range of the wireless communication signal transmitted from the nearby PDAs. In other words, the projector list 306 displays the list of device-identifying information (such as a media access control (MAC) address) corresponding to an individual wireless projector detected by the wireless utility program 11.

The projector list 306 has check boxes displayed for respective wireless-projector identifying information. The user can select a destination projector to which the screen image data of PDA 1 is to be transmitted by tapping the check box. For example, in the environment in which a wireless projector is installed in each of adjacent conference rooms, the PDA 1 can communicate with each of the projectors or selected ones of the projectors. The user selects a destination projector from the projector list 306, thus preventing the screen image data of PDA 1 from being transmitted to an undesired projector. The [GO] button 303 is not displayed on the wireless utility window 301 until the destination projector is selected by the user.

The [Security] check box 305 is used for the user to make an instruction on whether or not to encrypt screen image data to be transmitted. When the [Security] check box 305 has been checked by the user, the wireless utility program 11 is set to security mode. In the security mode, the screen image data is encrypted and then transmitted to the wireless projector 2.

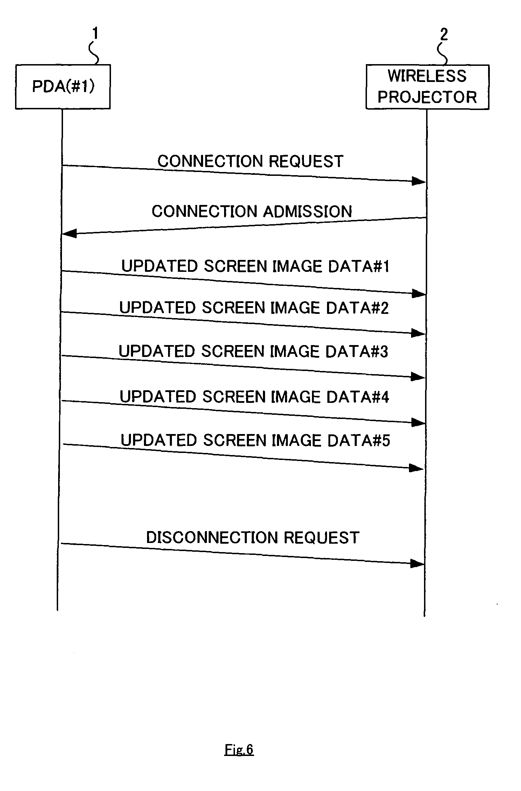

Referring to Fig. 4, when the [GO] button 303 is tapped by the user, the wireless utility window 301 is minimized and stored as an icon 403 in a command bar 402. This prevents the image data of the operation screen of the wireless utility window 301 for controlling the screen capture function from transmitting to the destination projector. A window 41 (a desktop window or an application window) which changed active instead of the wireless utility window 301 is displayed on the screen of the LCD 12. Then the current screen image data is transmitted to the destination projector.

When the icon 403 is selected (tapped on the PDA screed) by. the user, the wireless utility window 301 is displayed again. When the [STOP] button 304 is selected, the execution of the screen capture function is stopped.

Referring now to a flowchart of Fig. 5, the procedure of the screen capture process performed by the wireless utility program 11 is described.

When the wireless utility program 11 is activated, the wireless utility program 11 displays the wireless utility window 301 and then detects wireless projectors existing around the PDA 1 (step S101). In step S101, a device discovery process for detecting a device capable of communicating with the PDA 1 is performed.

Specifically, the wireless utility program 11 of PDA 1 broadcasts a device discovery command using the wireless LAN device 13 and then waits for a response to the device discovery command. Each wireless projector 2 that has received the device discovery command returns a response including a MAC address assigned to its own wireless LAN device 21 and an identifier indicating its own device type (for example, projector) to the PDA 1. The PDA 1 receives these responses and the wireless utility program 11 detects all of the wireless projectors existing within the transmission range of the PDA 1.

The wireless utility program 11 displays the list of the detected wireless projectors on the projector list 306 (step S102). When one wireless projector on the projector list 306 has been selected by the user (YES in step S103), the wireless utility program 11 displays the [GO] button 303 on the wireless utility window 301 (step S104).

When the [GO] button 303 is selected by the user (YES in step S105), the wireless utility program 11 sends a connection request to the wireless projector 2 selected from the projector list 306, and establishes a wireless connection with the selected wireless projector 2 (step S106). In step S106, not only the physical wireless link between the PDA 1 and the selected wireless projector 2, but also a session between is established.

After the wireless connection with the wireless projector 2 has been established, the wireless utility program 11 minimizes the wireless utility window 301 (step S107). The wireless utility program 11 captures the screen image data of PDA 1 (step S108).

In step S108, the wireless utility program 11 captures the current screen image data stored in on-screen area of the VRAM 106 through the OS. Concretely, the wireless utility program 11 issues a command to require capturing of the current screen image data. The OS reads out the current screen image data from the on-screen area through the display controller 104, and then passes it to the wireless utility program 11.

The wireless utility program 11 compares the newly captured screen-image data with the previous screen-image data that was sent last time in step S114, which will be described later. As a result of the comparison, the wireless utility program 11 determines whether or not the screen image data of PDA 1 has been updated (steps S109 and S110).

When the current screen image data captured in step S108 is different from the previous screen-image data that was sent last time, it is recognized that the screen image data has been updated. In such a case, it is determined that the screen-image data that has been newly obtained in step S108 is data to be transmitted (that is, updated screen image data).

The screen image data, that is first obtained after the [GO] button 303 has been pushed, is unconditionally determined to be updated screen image data. The process of capturing the screen image data (step S108) and the process of determining whether the captured screen image data is different from the screen image data that was sent last time (steps S109 and S110) are repeated at regular intervals.

When it has been determined that the captured screen image data is the data to be transmitted (updated screen image data) (YES in step S110), the wireless utility program 11 codes the captured screen image data (step S111 ) for facilitating transmission thereof by means of data compression. Subsequently, the wireless utility program 11 determines whether or not the security mode has been selected (step S112). When the security mode has been selected (YES in step S112), the wireless utility program 11 encrypts the coded screen image data (step S113), and transmits it to the selected wireless projector 2 using the wireless LAN device 13 (step S114).

Thus, encrypting the screen image data after coding it reduces the size of data to be encrypted. The key used for encryption can be generated by authentication and key exchange between the PDA 1 and the wireless projector 2 connected thereto.

When the operation mode of the wireless LAN device 13 is set in a mode using a wired equivalent privacy (WEP) key, encryption using the WEP key is performed in step S114. In such a case, the Screen image data is encrypted twice by two kinds of encryption processes in steps S 113 and S114. When the security mode has not been selected (NO in step S112), the process of step S113 is skipped.

The wireless connection between the PDA 1 and the wireless projector 2 is maintained until the user selects the [STOP] button 304. While the wireless connection is maintained, the processes of steps S108 to S114 are repeated.

Referring next to Fig. 6, communication between the PDA 1 and the wireless projector 2 will be described.

When the [GO] button 303 displayed on the LCD 12 of the PDA 1 has been selected, the PDA 1 sends a connection request to the wireless projector 2. When the PDA 1 has been notified of the connection admission from the wireless projector 2, wireless connection between the PDA 1 and the wireless projector 2 is established.

The wireless utility program 11 of the PDA 1 automatically transmits updated screen image data to the wireless projector 2 by wireless communication whenever the screen image data of PDA 1 is updated without the explicit instruction for performing transmission process of the screen image data by user.

When the [STOP] button 304 displayed on the LCD 12 of the PDA 1 had been selected, the process of capture and transmission of the screen image data is stopped. The PDA 1 transmits a disconnection request to the wireless projector 2, and then the wireless connection between the PDA 1 and the wireless projector 2 is disconnected.

Therefore, the screen capture function includes the function of transmitting the updated screen image data to the wireless projector 2 automatically by wireless communication whenever the screen image data of PDA 1 is updated. Hence, after user selects the [GO] button 303, the process for transmission of screen image data dose not need to be performed. When the screen image data has not changed, the transmission of data is not performed. Therefore, the incidence of useless wireless communication can be checked.

Additional advantages and modifications will readily occur to those skilled in the art. Therefore, the invention in its broader aspects is not limited to the specific details, representative devices, and illustrated examples shown and described herein. Accordingly, various modifications may be made without departing from the spirit or scope of the general invention concept as defined by the appended claims and their equivalents.

## Claims

1. An information processing apparatus for communicating with an external device, which displays received image data, by the wireless, comprising:
means for displaying a image data; **characterized by**
means for determining whether the image data to be displayed on the displaying means is updated; and
means for transmitting the updated image data to the external device when the determining means determined that the image data is updated.

2. An information processing apparatus according to claim 1, wherein
the determining means includes means for performing a determining process for determining whether the image data to be displayed on the displaying means is updated repeatedly during the communication with the external device, and
the transmitting means includes means for performing the transmission of the updated image data to the external device whenever the determining means determined that the image data is updated.

3. An information processing apparatus according to claim 1, wherein
the determining means includes means for obtaining the image data to be displayed on the displaying means at regular intervals; and means for determining whether the current image data obtained by the obtaining means is different from the previous image data that was transmitted last time, and
the transmitting means includes means for performing the transmission of the updated image data to the external device when the determining means determined that the current image data is different from the previous image data.

4. An information processing apparatus according to any one of claim 1 through 3, further comprising means for coding the image data to be transmitted by the transmitting means so that the transmitting means transmits the image data coded by the coding means to the external device.

5. An information processing apparatus according to any one of claim 1 through 3, further comprising
means for detecting one or more external devices existing within the range of the wireless communication by the transmitting means; and
means for selecting at least one of the external devices detected by the detecting means so that the transmitting means transmits the image data to the selected external device.

6. A method for transmitting an image data displayed on displaying means of an information processing apparatus from the information processing apparatus to an external device, which displays received image data, by the wireless, comprising:
determining whether the image data to be displayed on the displaying means is updated; and
transmitting the updated image data from the information processing apparatus to the external device when it is determined that the image data is updated in the determining step.

7. A method for transmitting an image data according to claim 6, wherein
the determining step includes the step of performing a determining process for determining whether the image data to be displayed on the displaying means is updated repeatedly during the communication between the information processing apparatus and the external device, and
the transmitting step includes the step of performing the transmission of the updated image data from the information processing apparatus to the external device whenever it is determined that the image data is updated in the determining step.

8. A method for transmitting an image data according to claim 6, wherein
the determining step includes the steps of obtaining the image data to be displayed on the displaying means at regular intervals; and determining whether the current image data obtained in the obtaining step is different from the previous image data that was transmitted last time, and
the transmitting step includes the step of performing the transmission of the updated image data from the information processing apparatus to the external device when it is determined that the current image data is different from the previous image data in the determining step.

9. A method for transmitting a image data according to any one of claim 6 through 8, further comprising the step of coding the image data to be transmitted in the transmitting step so that the coded image data is transmitted from the information processing apparatus to the external device in the transmitting step.

10. A method for transmitting a image data according to any one of claim 6 through 8, further comprising the steps of:
detecting one or more external devices existing within the range of the wireless communication of the information processing apparatus; and
selecting at least one of the detected external devices in the detecting step so that the image data is transmitted from the information processing apparatus to the selected external device in the transmitting step.
